# EUROPÄISCHE PATENTANMELDUNG

(11) **EP 1 467 548 A1**
(43) Veröffentlichungstag der Anmeldung: **13.10.2004**
(21) Anmeldenummer: 04001416.9
(22) Anmeldetag: 22.01.2004
(51) Int. Cl.: H04M 11/02, H04M 1/02

(54) **Einrichtung zur Verbindung von Schnurlostelefonen mit Türsprechstellen**

(30) Priorität: 22.01.2003 AT 832003
(71) Anmelder: Witt-Dörring, Rudolf, 2320 Zwölfaxing (AT)
(72) Erfinder: Witt-Dörring, Rudolf, 2320 Zwölfaxing (AT)

(57) **Zusammenfassung**

Gegenstand der Erfindung ist ein DECT Adapter. Dieser Adapter verbindet die Türsprechanlage(2) mit DECT Schnurlostelefonen(5)(6).

Für die erfindungsgemäße Vorrichtung(1) wird die Türsprechanlage(2) entweder wie üblich von der Haustüre bis in die Wohn- oder Betriebsräumlichkeiten verkabelt und im Wohnraum der DECT Adapter(1) angebracht oder der DECT Adapter(1) wird direkt an der Haustüre montiert.

Die Besonderheit des DECT Adapters(1) ist, das dieser nicht als Mobilteil (PP = Portable Part) sondern als Verstärker (WRS = Wireless Relay Station) und/oder Feststation (FP = Fixed Part) betrieben wird.

Diese Schaltungsvariante als Repeater hat den Vorteil, daß der Empfangsbereich vergrößert und verbessert wird und sich dadurch mehrere Hausparteien oder Anwender an die Türstation anschließen können.

Außerdem können gedrückte Tasten "Keypad Infos", die von vorhandenen Mobilteilen(5)(6) zur Steuerung der Türstation zum DECT Adapter gesendet werden, in Repeatern(WRS) und Feststationen(FP) leichter ausgewertet werden.

## Beschreibung

Die vorliegende Erfindung betrifft einen DECT Adapter zur Nutzung der DECT (Digital Enhanced Cordless Telecommunication) Technologie zur Bedienung von Türsprechsystemen.

Bei DECT Schnurlostelefonen ist es üblich, daß eine oder mehrere Mobile Telefone an einer Basisstation angemeldet sind und sowohl untereinander, als auch mit dem öffentlichen Telefonnetz kommunizieren können.

Im Bezug auf die Verwendung von DECT Systemen bei Türsprechanlagen ist es üblich ein Türmodul mit Lautsprecher und Microfon über ein DECT Modul im Betriebsmodus Mobilteil (PP = Portable Part) mit der Feststation zu verbinden und sich so die Verkabelung von der Türe in die Wohnung zu ersparen. Die Schaltung als Mobilteil (PP = Schnurloses Telefon), wie sie auch in der Patentschrift DE19628764 Anspruch 1 beschrieben ist hat den Nachteil, dass es in der Praxis sehr schwer ist die Türe von einem anderen Mobilteil zu öffnen, da im Falle von DECT meist keine Keypad Info von einem anderen Mobilteil über die Feststation zur Türstation übertragen werden.
In der Praxis sind mit DECT Schnurlostelefonen auch nur Reichweiten von 50 Metern im Haus und 300 Metern im Freien zu erreichen, wodurch die schnurlose Anbindung von Türsprechsystemen in der Schaltung als Mobilteil sehr begrenzt nutzbar ist.

Gegenstand der Erfindung ist ein DECT Adapter. Dieser Adapter verbindet die Türsprechanlage mit dem DECT Schnurlostelefon. Für die erfindungsgemäße Vorrichtung wird die Türsprechanlage entweder wie üblich von der Haustüre bis in die Wohn- oder Betriebsräumlichkeiten verkabelt und im Wohnraum der DECT Adapter angebracht oder der DECT Adapter wird direkt an der Haustüre montiert.

Die Besonderheit des DECT Adapters ist, das dieser nicht als Mobilteil (PP = Portable Part) sondern als Verstärker (WRS = Wireless Relay Station) und/oder Feststation (FP = Fixed Part) betrieben wird.
Im Repeater Mode (WRS) arbeitet der DECT Adapter in Richtung Feststation als Mobilteil und in Richtung Mobilteil als Feststation. Der DECT Adapter (1) im Repeater Modus wird als intelligenter Repeater betrieben. Das heißt, er wird mit dem PIN der Basisstation(4) an diese angemeldet und Mobilteile(5)(6) werden mit einem eigenen PIN des Repeaters an diesen angemeldet.
Die Schaltungsvariante als Repeater hat den Vorteil, daß der Empfangsbereich von vorhandenen Feststationen (FP = Fixed Part) vergrößert und verbessert wird.

Ein weiterer Vorteil der Schaltung des DECT Adaptes als Repeater ist, daß sich dadurch mehrere Hausparteien oder Anwender an die Türsprechanlage anschließen können, auch wenn diese außerhalb der normalen Reichweite einer DECT Basisstation liegen.
Die Erfindung wird anhand der nachstehenden Abbildung näher erläutert.
Fig. 1 zeigt eine erfindungsgemäße Anordnung des DECT-Adapters bei Wohnungsseitigen oder straßenseitigen Türsprechmodul.
Fig. 2 zeigt eine erfindungsgemäße Anordnung vom DECT-Adapter in Repeaterschaltung.
Im folgenden wird auf Fig. 1 Bezug genommen.
Der DECT Adapter(1) ist als intelligenter Repeater mit dem PIN der Feststation(4) an diese angemeldet. Die Mobilteile(5)(6) sind mit dem PIN des DECT Adapters(1) an diesen angemeldet.
Der DECT Adapter(1) erkennt ein Läuten an der Türe und ruft direkt die gewünschten Mobilteile(5,6). Ein Mobilteil hebt ab und kann mit der Türe sprechen und diese per Tastenkode (Keypad Info) öffnen.

Soll ein Türgespräch das öffentliche Telefonnetz rufen, so geht der Türruft vom DECT Adapter(1) in WRS-Mode über die Feststation(4) ins öffentliche Netz oder das öffentliche Netz wird direkt am DECT Adapter(1) in FP-Mode angeschlossen.

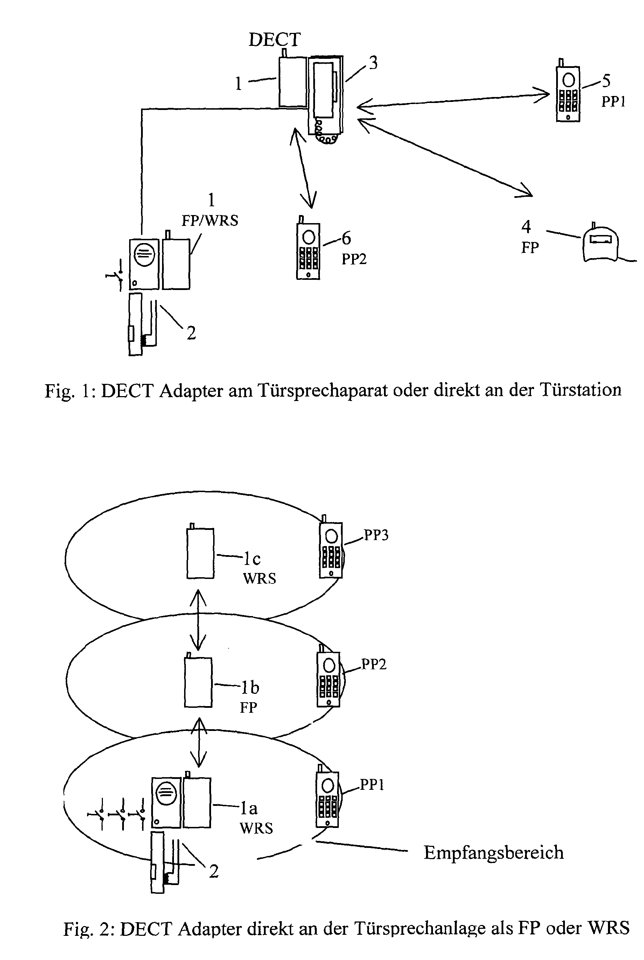

Im Folgenden wird auf Fig. 2 Bezug genommen.
Der DECT Adapter(1) wird direkt an der Türe montiert und wird als intelligenter Repeater betrieben.
Ein Läutdetektor erkennt ein Türgespräch und ruft über Repeater und Feststation die gewünschten Mobilteile. Nach dem Abheben eines Mobilteiles wird die Sprechverbindung Haustür - [gegebenenfalls Kabel] - DECT Adapter 1a im FP oder WRS Mode - [DECT Adapter(1b) im FP oder WRS Mode] ... - Mobilteil hergestellt. Der Gerufene kann mit der Türstation über den DECT Adapter sprechen und die Türe über die Eingabe von Tastenkodes auch öffnen. Gegebenenfalls kann ein als DECT Feststation (FP) geschaltetes DECT Modul das Türgespräch auch über das öffentliche Telefonnetz an einen anderen Telefonanschluß weiterverbinden oder einem Anrufbeantworter übergeben.

## Patentansprüche

1. Einrichtung(1) zur Kopplung einer Türsprechanlage(3) mit DECT Schnurlostelefonen(5)(6) zum Zweck der Übertragung der Funktionen Läuten, Sprechen und Öffnen **dadurch gekennzeichnet, daß** ein DECT Adapter(1) an den wohnungsseitigen Handaparat(3) der Türsprechanlage(2) oder direkt an das straßenseitige Türmodul(2) angeschalten wird wobei das DECT Modul(1) im Betriebsmodus Feststation(FP) oder Repeater(WRS) betrieben wird.
